(19) Europäisches Patentamt / European Patent Office / Office européen des brevets

(11) **EP 2 488 267 B1**

(12) **EUROPEAN PATENT SPECIFICATION**

(45) Date of publication and mention of the grant of the patent:
**19.04.2017 Bulletin 2017/16**

(51) Int Cl.:
**B01D 15/18** (2006.01)   **G01N 30/88** (2006.01)

(21) Application number: **10766472.4**

(22) Date of filing: **12.10.2010**

(86) International application number:
**PCT/US2010/052328**

(87) International publication number:
**WO 2011/046936 (21.04.2011 Gazette 2011/16)**

(54) **CONVERSION OF FIXED-BED LIQUID CHROMATOGRAPHY PROCESSES TO SIMULATED MOVING BED PROCESSES**

UMWANDLUNG VON FESTBETT-FLÜSSIGCHROMATOGRAFIEVERFAHREN IN VERFAHREN MIT SIMULIERTEM BEWEGLICHEM BETT

CONVERSION DE PROCESSUS DE CHROMATOGRAPHIE LIQUIDE À LIT FIXE EN PROCESSUS À LIT MOBILE SIMULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2009 US 278823 P**

(43) Date of publication of application:
**22.08.2012 Bulletin 2012/34**

(73) Proprietor: **Pall Corporation**
**Port Washington, NY 11050 (US)**

(72) Inventors:
• **BISSCHOPS, Marc, A., T.**
**NL-4813 CS Breda (NL)**
• **LONDO, Thomas, R.**
**Ashland**
**MA 01721 (US)**

(74) Representative: **Hoeger, Stellrecht & Partner**
**Patentanwälte mbB**
**Uhlandstrasse 14c**
**70182 Stuttgart (DE)**

(56) References cited:
**WO-A2-03/026772    US-A1- 2007 068 873**

• **KAWAJIRI ET AL: "Large scale optimization strategies for zone configuration of simulated moving beds", COMPUTERS & CHEMICAL ENGINEERING, PERGAMON PRESS, OXFORD, GB, vol. 32, no. 1-2, 1 November 2007 (2007-11-01), pages 135-144, XP022324483, ISSN: 0098-1354, DOI: DOI:10.1016/J.COMPCHEMENG.2007.04.009**
• **ALAMIR ET AL: "A flexible nonlinear model predictive control scheme for quality/performance handling in nonlinear SMB chromatography", JOURNAL OF PROCESS CONTROL, OXFORD, GB, vol. 16, no. 4, 1 April 2006 (2006-04-01), pages 333-344, XP005213802, ISSN: 0959-1524, DOI: DOI:10.1016/J.JPROCONT.2005.07.001**

**Description**

BACKGROUND OF THE INVENTION

The present disclosure relates to separation or purification of molecules using simulated moving bed (SMB) chromatography methods. In particular, the present invention relates to methods and apparatus for automatically adapting fixed-bed chromatography procedures to operate in a continuous simulated moving bed setting.

Fixed-bed Liquid Chromatography

The practice of fixed-bed (hereinafter "FB") liquid chromatography separations is ubiquitous in the process development and manufacturing operations of companies needing to effect isolation and/or enrichment of select molecules contained in complex liquid media. In standard FB separations, the steps comprising the liquid chromatography method are performed sequentially over a single column or a set of columns connected in series and the separation method runs from beginning of the sequence to end. If the production and purification campaign contains more sample than can be run during a single separation method sequence, the method is run multiple times from the beginning of the sequence to the end until the sample is exhausted. Thus, separations in FB are executed in discrete runs with a portion of the total sample typically being applied during each run. Another point of note is that since the method is executed in total for each of the runs, each run uses its full complement of solvent.

One advantage of FB is that there are no special restrictions or considerations as to the durations of the steps comprising the method. The developer of a separation method using an FB system is free to program each step to be as long or as short as desired to accomplish the appropriate action for the given separation phase.

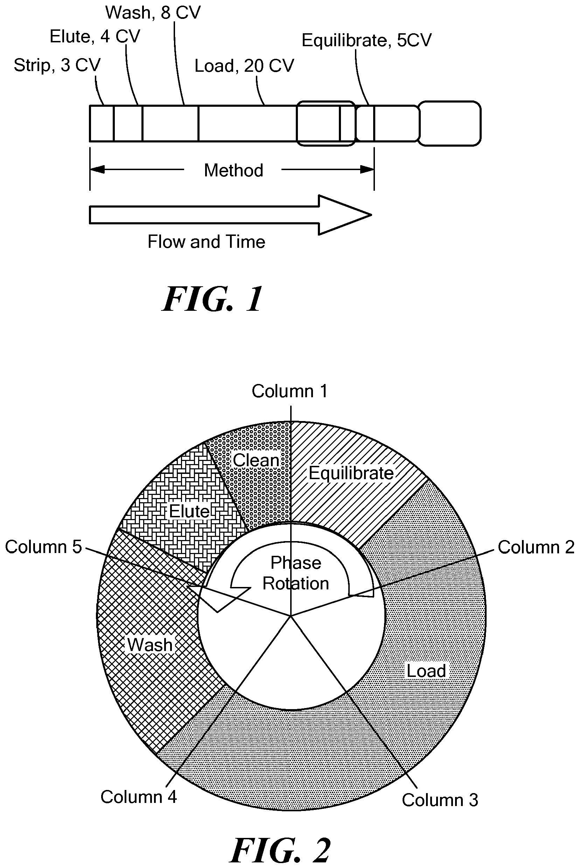

A primary design goal, however, is to limit the duration of each step to be as short as possible to minimize processing time and solvent usage. For example, a simple liquid chromatography method might consist of Equilibration, Loading, Washing, Elution, and Cleaning (Regeneration) steps, respectively. Equilibration might run for five column volumes (5 CV) to prepare the column for a desired or optimal adsorption of the desired sample constituents. Loading might be implemented for twenty column volumes (20 CV) to potentially maximize resin utilization while attempting to minimize excessive sample losses due to breakthrough. Washing might last for eight column volumes (8 CV) to adequately wash the column of unretained and slightly retained molecules. Elution might be carried out for four column volumes (4 CV) to attempt to completely desorb and elute the desired product with minimal dilution. Cleaning might last for three column volumes (3 CV) delivered at a slow rate to permit complete removal or deactivation of a particular contaminant. A graphical representation of a fixed-bed liquid chromatography process is shown in Fig. 1. The figure illustrates the sequential nature of the method steps as they are sequentially applied to the column. In most instances, the Equilibrate, Wash, and Clean steps can be executed longer than indicated without negatively affecting the overall separation. However, for processing time and buffer usage considerations, these operations are adjusted to be close to their minimum acceptable durations.

Development and optimization of fixed-bed liquid chromatography methods are relatively straightforward and well described and documented in the industry literature. Many groups utilize standard Design of Experiment (DOE) techniques for this purpose.

Simulated Moving Bed Liquid Chromatography

An improved liquid chromatography process, known as Simulated Moving Bed (hereinafter "SMB") Liquid Chromatography offers significant operational advantages over FB, especially in cases where very large sample volumes need to be processed. In contrast to FB, SMB does not require multiple discrete runs to process these large sample volumes but instead is designed for continuous sample processing. Continuous processing is accomplished by operating several columns in parallel, where one or more of the parallel columns can be composed of columns connected in series, typically with each column (or columns) in a different phase of the chromatographic process. Fig. 2 shows a graphical representation of an SMB method that corresponds to the FB method described above, as executed in SMB mode. The inlets and outlets of the columns (five are contemplated in the system diagrammed in Fig. 2) can be connected together to form a multi-column circuit or SMB system.

Inlets to the system for sample feed (for Loading), wash buffer (for Washing), eluant or desorbant (for Elution), and solutions for the Cleaning and Equilibration steps are provided. The system also has outlets for recovery of product, recycling of raffinate, and collecting or taking off waste. The system inlets and outlets are arranged in a predefined manner, dividing the columns into phases or "zones" of the SMB separation process. As the columns complete their respective phase (Loading, Washing, Elution/Cleaning, Equilibration), the inlets and outlets are switched in the direction of flow of liquid through the system, and in this way the columns are shifted to the next phase and progress through the chromatographic method.

The shifting of system inlets and outlets (e.g., using valves) in SMB mode simulates a movement of the columns in a direction counter to the flow of the system, hence the term "simulated moving bed." The column completing the last phase of the SMB method moves to the first phase to start another pass, and the process continues on a cyclic basis. For example, when a column (or columns) in the Load phase becomes saturated, it moves to the Wash phase. The column currently in the Wash phase in turn moves to the Elute phase and so on for the other columns. The column in the Clean phase moves to the Equilibrate phase to start a new pass through the process. This process continues until the entire sample is exhausted. In addition to continuous sample processing, SMB methods generally requires less chromatographic resin and use less solvent than FB methods.

Converting FB Methods to SMB Methods

Before an effective SMB method can be created, appropriate chromatographic parameters for each phase of the process are typically determined. One convenient starting point for determining these SMB parameters may be the prior development and optimization of an FB method. The FB method is then converted to a comparable SMB method. A significant issue with this conversion is that there are additional parameters and considerations involved with SMB that are not of concern in an FB process and are not familiar to FB developers. Examples of SMB concepts include Switch Time, Cycle Time, Selectable Inlets, Selectable Outlets, Cycle Time Completion, and others. The conversion from one to the other is not trivial and requires several non-obvious adjustments. Once a base SMB method is created, it is a relatively straightforward process to optimize it for the desired process goals. Currently developers typically undertake considerable training in both FB and SMB approaches to reasonably convert separation processes from one mode to the other.

WO 03/026772 A2 discloses distributed valve simulated moving beds in which junctions located between successive columns interrupt the flow of process fluid between columns, and either transmit the process fluid through a zone bypass to a succeeding column within the same zone or, if the junction is located between zones, direct the process fluid to an input/output line that is dedicated to the particular zone that immediately follows the junction. At each step of the SMB's operation, the distribution of flows in each junction is modulated to accomplish movement of parts consistent with the SMB's design.

US 2007/0068873 A1 describes a valve assembly for simulated bed moving chromatography which employs a combination of pressure compatible sealable materials that permit minimal frictional interaction between moving parts, ensures alignment of parts, and provides a method for conducting SMB countercurrent chromatography on a small scale, in which purity and separation efficiency are enhanced. Machine designs are disclosed which embody the SMB concepts.

BRIEF SUMMARY OF THE INVENTION

The present invention relates to a system for automatically adapting fixed-bed chromatography procedures to operate in a continuous simulated moving bed (SMB) liquid chromatography process setting as defined in claim 1.

The present invention further relates to a method executed on a numerical computation device for obtaining a simulated moving bed (SMB) liquid chromatography process as set out in claim 8.

The present disclosure describes a novel means for SMB process development that comprises a collection of user tools and algorithms allowing process developers to simply and conveniently enter FB method parameters into a user interface as they would to program existing, automated FB systems, to permit automatic generation of an executable SMB method. The developer can use the user interface to enter information in terms of the familiar liquid chromatography parameters and column dynamics particular to fixed-bed separations. The algorithms of the present invention utilize the FB parameter input to create a suitable, executable SMB method with first-pass optimization.

According to an exemplary embodiment of the present disclosure, a user interface is provided to assist users in entering and visualizing chromatography methods for fixed bed and simulated moving bed applications. The user interface can provide the user with tables to enter parameters for various chromatography phases to develop a complete method for a chromatography application. For example, one or more tables can be provided by the user interface to permit a developer to enter information into designated table locations to specify chromatography parameters for FB or SMB modes. The user interface can provide a graphic representation for FB or SMB modes illustrating the effect of the parameter values entered into the table upon the overall chromatography process.

According to one exemplary embodiment of the present disclosure, a graphical representation of an FB and/or an SMB process is provided to reflect user input parameter values. The graphical representation may be in the form of a linear map of phases for an FB process. The graphical representation may be in the form of concentric circles representing input and output phases for an SMB process. The graphical representation may also illustrate sections related to columns of the SMB process, and can illustrate the different phases of the SMB process applied through the various columns. According to an aspect of the present disclosure, the graphical representation is updated in real time to reflect parameter values that are input by the user to specify the SMB process.

According to another exemplary embodiment of the present disclosure, the user can enter parameter values related to FB chromatography processes in a format familiar to FB chromatography developers, and submit a request to the user interface to convert the parameter values to an SMB chromatography method. The user interface is implemented with algorithms to accept FB parameter values and determine SMB parameter values for a corresponding SMB method. According to an aspect, the algorithms implemented with the user interface can identify discrepancies between the generally sequential FB method and the generally cyclical SMB method. The user interface can identify recommendations and suggestions for modification of the SMB parameter values to overcome the discrepancies to obtain a full SMB cyclic method.

According to the present invention, an SMB method can be formulated using an idle phase that represents a pause or timing interval between one or more other phases to obtain a desired step timing for a cyclical SMB method. According to an aspect of the disclosure, the idle phase contributes to the formation of SMB methods that are integral multiples of specified length steps that tend to determine the overall cycle time for an SMB method. The idle phase may also be implemented when converting FB methods to SMB methods to overcome discrepancies that may arise as a result of the change from the serial sequential nature of FB methods to the cyclical characteristic of SMB methods.

Outputs of the presently disclosed systems and methods include user interface displays to permit a user to interact with the user interface, and control profiles for operating a chromatography apparatus. The control profile can be provided directly to a chromatography apparatus that is co-resident with a computing system that generates the control profile. Alternately, or in addition, the control profile can be provided in the form of a computer readable file that can be transported between a computing system and a chromatography apparatus, and/or vice versa.

BRIEF DESCRIPTION OF THE SEVERAL VIEWS OF THE DRAWINGS

The present invention is described in greater detail below, with reference to the accompanying drawings, in which:

Fig. 1 is a graphical illustration of a fixed-bed liquid chromatography method as it is run using a single chromatography column;

Fig. 2 is a graphical depiction of a simulated moving bed (SMB) liquid chromatography process as it is run using five chromatography columns;

Fig. 3 illustrates user interface representations for FB and SMB modes;

Fig. 4 is a graphical representation depicting an example user interface for the input of FB parameter data to initiate generation of SMB process parameters automatically, according to the methods of the invention;

Fig. 4A shows a series of circular charts illustrating alternative operational characteristics of the charts in accordance with an exemplary embodiment of the present disclosure;

Figs. 5-7 are flowcharts illustrating the parameter entry and conversion for FB and SMB methods; and

Fig. 8 is a schematic diagram showing column connections for a five-column series such as may be defined in accordance with the illustration in Fig. 4.

DETAILED DESCRIPTION OF THE INVENTION

The present disclosure provides methods and devices comprising a collection of user tools and algorithms that can be implemented in a user interface. Separation process developers can enter FB method parameters into the user interface, such as in a tabular format. The user interface presents a similar environment to programming a standard, automated FB system. The entered data can be used to automatically generate an executable SMB method. The user can enter familiar FB parameters and column dynamics particular to Fixed-bed separations (e.g., fixed-bed step durations, residence times, solvent compositions, etc), in a familiar format without necessarily being retrained. The algorithms of the invention utilize the input to create a suitable, executable SMB method with first-pass optimization.

User Interface and Method Editor

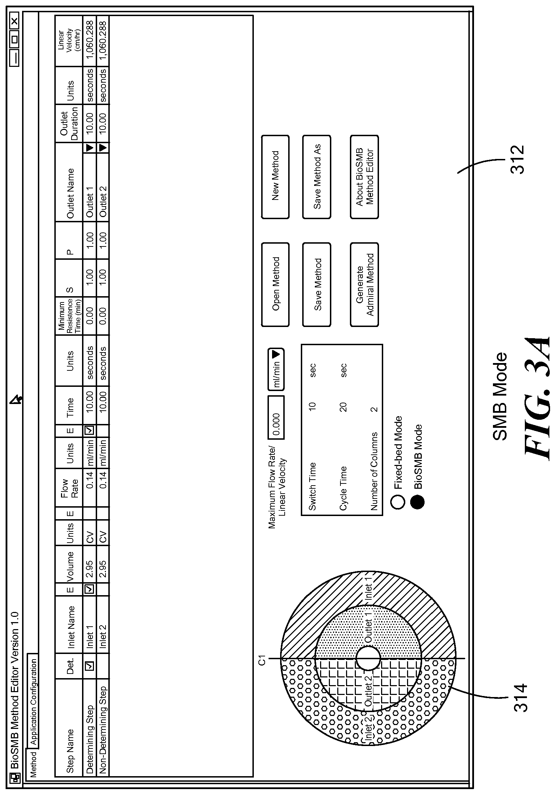

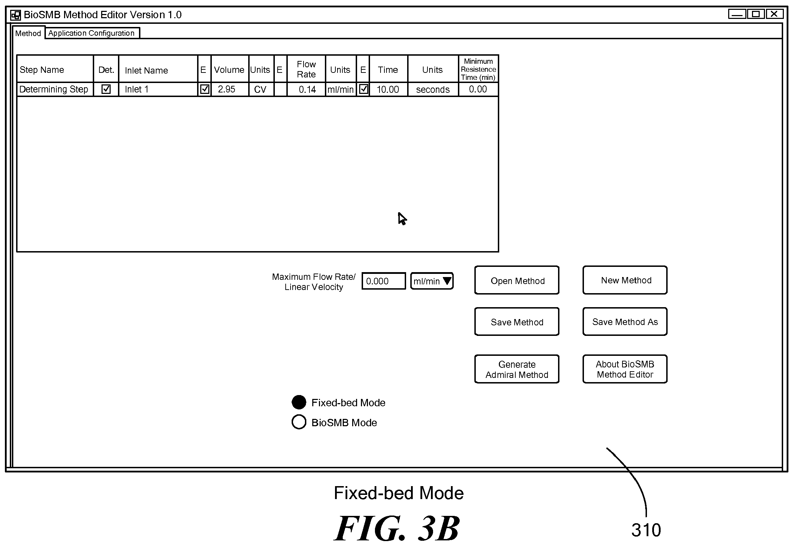

The user interface provides a method editor software tool to permit developers to create, edit or optimize FB and/or SMB methods. Referring to Fig. 3, exemplary user interface displays are illustrated for FB and SMB modes. Display 310 shows a tabular format input screen for FB mode, while display 312 shows a tabular input format and a graphical representation 314 for use in SMB mode. In FB mode in display 310, input parameter value entries are available for selection by the user, while output parameter value entries are not shown. Entries for parameters related to outputs in FB mode are not provided since the outputs are the same for the linear FB method, which operates from a beginning of a given sequential method to the end of the sequence.

In contrast, display 312 provides entries for input parameters and entries for output parameters to define the cyclic operation of an SMB method. Display 312 also includes graphical representation 314 of the SMB method defined with the input and output parameter entries. Graphical representation 314 is in the form of two concentric circles indicating the various defined phases of the specified SMB method as implemented among the various selected columns. Graphical representation 314 is referred to as a "circular chronogram" and is discussed in greater detail below.

With the input entries of display 310, the method designer may specify method steps of any duration desirable in FB mode. Step duration need not be restricted since each step can be run in sequence and has substantial modal control over the system during execution. The entire FB method is executed sequentially and once per run, with each step of the FB method executing exclusively in its sequential turn. FB method steps are typically sequential, so that there is no simultaneous processing of different method steps, *i.e.*, the method steps have no overlapping temporal influences on each other. The specified FB method executes from the beginning of the method to the end step in sequence, with the entire method being executed prior to further iterations of the FB method. Furthermore, FB methods define a single column for use in the method, to which each of the steps for the method are applied.

In SMB mode, as shown in display 312, the user interface permits specification of input and output parameters as well as columns that operate in parallel to implement the cyclical method. The SMB method produced by the algorithms in the user interface permit each step to be executed in parallel with all other steps of the method, *i.e.*, these steps share overlapping temporal execution durations on different columns. The method editor checks for any discrepancies or violations of timing or processing and can prompt the user with acceptable approaches, values and/or suggestions or recommendations to overcome the discrepancy or step violation. As the user enters data into the fields provided in display 312, the user interface algorithms add and subtract columns as needed, in series and/or parallel to meet the specified parameters to obtain appropriate flow, capacity and molecular residence time for the given step definitions.

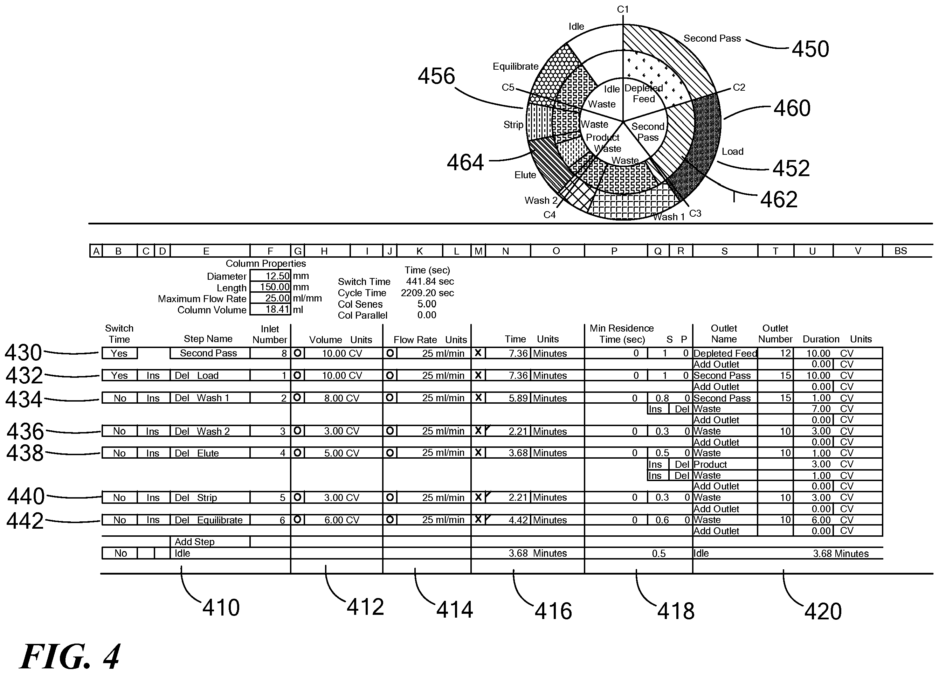

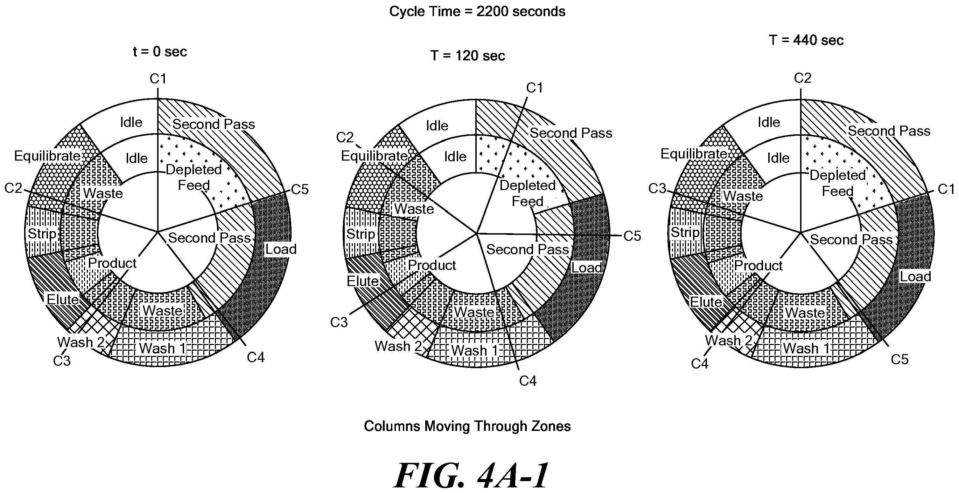

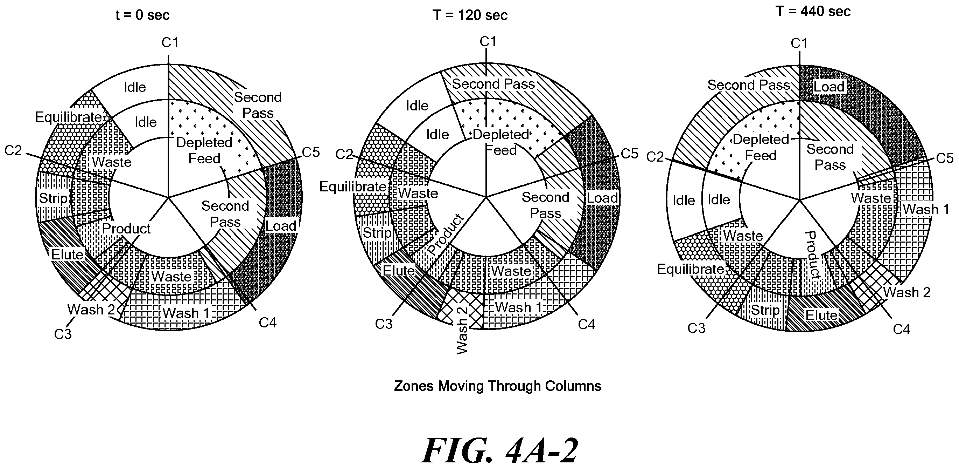

The present disclosure permits the use of multiple outlets for each step, allowing the user great convenience and flexibility for optimizing the method. SMB methods often direct the output of a given column to another column for approximately a column volume or more as part of the optimization process. An example of such a configuration is shown in Fig. 4, where columns entering Wash 1 (Column C3 in the figure) have their outputs temporarily directed to the Second Pass inlet for a column volume recovering the sample rich liquid in the mobile phase of the column having just come from the Load phase. After that column volume, the output of the column is directed to Waste.

The method editor of the present disclosure provides a tabular or block style input region for parameter value entry by the user for each stage or step in the separation method. The format of the method editor in the user interface permits the user to enter parameter values in any desired order, such as by entering all the values for a given method in one of the tabular columns of display 310 or 312. Users might also enter parameter values by filling in a row of parameters for a given step. Entire steps can be inserted or deleted, which prompts the algorithms in the user interface to automatically adjust the method. Modifications to the steps of the method that result in discrepancies or step violations are identified, preferably in real-time, and solutions for overcoming the discrepancy or violation are suggested to the user, preferably in real-time.

Parameter value entries that are common to the FB and SMB modes include column volume and maximum flow rate or flow velocity. Column volume can be entered directly in milliliters, or as column dimensions, such as diameter and length. Typically, diameter and length are entered in millimeters and column volume is calculated as

$$CV = \frac{\pi * d^2 * l}{4}$$

where d is diameter and l is length.

Maximum flow rate or flow velocity for the column is typically specified in terms of ml/min or cm/hr, respectively. If the maximum flow rate for the given number of columns in a step is violated, the algorithms of the user interface automatically specify parallel sets of columns that include the original number of columns placed in series. The number of integral sets of columns are placed in parallel to obtain a flow rate through each branch that is equal to or less than the maximum flow rate or flow velocity. Flow rate through a branch is given by

$$FR = \frac{Step\ Flow\ Rate}{Parallel\ Branches}$$

Parameter value entries that may be specific to either the FB mode or SMB mode may include the specification of a tag or user friendly name for a step, and identification of an inlet and/or outlet. The inlet specification implies an associated buffer solution being selected. In addition, an outlet and an associated destination can be selected in SMB mode, which destinations may include Waste, Product, Second Pass, Previous Column, or any other available destinations that can be chosen based on the selection of an outlet for a given step. It is possible to designate multiple outlets for a given step, as is often desirable in SMB mode. For example, it may be desirable to flow the first liquid portion from a column entering a step to a first destination, and the remainder of the liquid portion to another destination. For instance, a column having just completed a Load step and entering a Wash step may include liquid within the column that is essentially identical to the sample that was just loaded into the column. It may be desirable to recover the sample rich liquid by directing the initial effluent portion back over the new column in the load position while pumping Wash buffer into the column from the inlet side. After an appropriate amount of Wash buffer has filled the column, evacuating the sample rich liquid that was originally there, the column outlet can be directed to Waste for the remainder of the Wash period. According to an exemplary embodiment, the total outlet time for a step is set equal to the total inlet time for that step.

Another parameter value that may apply to FB and/or SMB methods is the duration and fluid volume of the designated step. Step duration and volume are determined by designating two out of the three variables of time, volume or fluid rate. Time can be specified in seconds, minutes, or units representing the longest step durations that tend to determine overall method time. In accordance with an exemplary embodiment of the present disclosure, an integral unit of time can be defined as a "determining step," which represents the total duration of all steps designated in the method that tend to define the overall duration of the method. The step volume can be defined in milliliters, liters or column volumes. The fluid rate can be defined in terms of milliliters/minute or centimeters/hour. If time and volume are specified, the flow rate is set to obtain the designated volume flow of fresh fluid entering the first column of the step through the last column in series, in each parallel branch, in the designated time. For example, if the step calls for 10 milliliters in 15 minutes for a method with columns of 5 ml CV, the flow rate for a single column is 10 ml/15 minutes or 0.667 ml/min. If the above parameters are applied to a series of two columns, the flow rate is 20 ml/15 min or 1.333 ml/min. If the above values are entered for paralleled sets of two columns in series, the flow rate is calculated as 40 ml/15 min or 2.667 ml/min. The algorithms provided with the user interface can automatically calculate these values, which are typically non-intuitive for an FB or SMB liquid chromatography designer.

Another parameter value that can be specified for a step is the duration for each outlet that is identified for the given step. The outlet duration can be designated in seconds, minutes or determining step units, which are defined as discussed above.

Another parameter value entry for a step specification is the minimum molecular residence time, which can be specified in seconds, minutes or cm/hr. The residence time is the minimum time fluid entering the top of the column should remain in the column before emerging from the bottom of the column. If the duration and volume parameters for the designated step are calculated to indicate a molecular residence time less than the designated minimum molecular residence time, the algorithms in the user interface can suggest overcoming the discrepancy by slowing the flow rate, or by switching to larger columns, or specifying additional columns in series. It should be noted that the specification of additional columns in series can be a fractional portion of a column.

Referring to Fig. 4, the SMB conversion methods and apparatus of the invention allow users to program the duration of each step in terms of volume, time, and/or flow rate, whichever is the most convenient for the given step, as shown in table columns 412, 414 and 416. To further simplify information entry, multiple units for each parameter are available. For example, volume can be entered in ml, 1, or CV. Time can be entered in seconds (sec), minutes (min), or Switch Time. Flow rate can be entered in ml/min or cm/hr. The calculations performed by a conversion algorithm according to the present disclosure are discussed in greater detail below.

Circular Chronogram

The present disclosure provides a preferably real-time, unique graphical representation of the SMB method as reference for the user during parameter entry and subsequent optimization. An example is shown in the top half of Fig. 4. The figure shows the process steps entered by the user (e.g., in rows 430, 432, 434, 436, 438, 440, and 442 in the bottom half of the figure) on the outer ring of a circular chart 460. Typically, each step represents one of the selectable inlets on an SMB system. The inner ring of circular chart 460 depicts the designated outlets and their open period for each step as entered in column 420 in the bottom half of Fig. 4. For example, a first step 450 in the illustrated method uses the Second Pass inlet and the Depleted Feed outlet. The columns and their positions relative to the various steps are overlaid on circular chart 460. As shown in Fig. 4, Column 1 (C1) is in the Second Pass step, Column 2 (C2) is in the Load step, Column 3 (C3) is in the Wash 1 step, Column 4 (C4) is in the Wash 2 step, and Column 5 (C5) is in the Equilibrate step. As the method progresses, the columns effectively rotate clockwise or the steps effectively rotate counter-clockwise, indicating which step or phase each column will enter next. For example, after a short time Columns 1, 2, 3, and 5 remain in their respective steps while Column 4 enters the Elute step.

As a user enters tabular data to define an SMB method, or converts an FB method to an SMB method, circular chart 460 can be updated in real-time to provide feedback to the user on the configuration of the SMB method. Circular chart 460 includes an inner ring 462 and an outer ring 464 in a spoke plot arrangement with concentric centers. Outer ring 464 symbolizes the inlets (also known as zones) used by the method and illustrates the various steps of the method as a relative percentage of the overall cycle. The method steps associated with the inlets are illustrated as an overlay on spokes of the spoke plot arrangement to show execution of the method steps with respect to the various columns. The duration of each of the steps shown in circular chart 460 is the result of calculations performed by the user interface, so that each step or zone in the chart accurately reflects the relative duration of the given step or zone with respect to the various columns of the method.

Inner ring 462 represents outlets used in the method, where each of the steps or zones associated with the outlets is represented as a relative percentage of the overall method cycle. Inner ring 462 and outer ring 464 are configured to operate together to maintain a fixed relationship, i.e., they generally are not configured to change position with respect to each other.

The spoke plot of circular chart 460 symbolizes the number of SMB columns used in the method, with five columns being shown in Fig. 4. In general, the spokes are equally spaced around circular chart 460. By depicting the SMB method with circular chart 460, the user can readily understand the configuration of the depicted method, and can readily make adjustments to the SMB method that are reflected in circular chart 460. For example, the user can see the flow of all steps in the method, as well as determine the state of all columns and determine the length of time until the next transition for each column. Circular chart 460 is typically read by locating a step or zone on outer ring 464 and moving in a radial direction toward inner ring 462 to understand the flow associated with the located step or zone. For example, in a first step 450 flow goes directly from an inlet to an outlet, i.e., the Second Pass inlet flows into the inlet side of column C1, through column C1, and then to the Depleted Feed outlet. A second step 452 shows that the Load inlet flows through column C2 to the Second Pass outlet, which is connected to the Second Pass inlet in first step 450. Accordingly, the two columns involved in going from the Load inlet to the Depleted Feed outlet execute in series. Another step 456 illustrates a column progressing through a zone that switches the outlet initially from Waste to Product and then back to Waste before exiting the zone. A zone that extends across two or more column lines where the same column lines are also contained in the same outlet indicates columns operating in parallel.

Circular chart 460 can also be used to provide method simulation and illustrate method execution, preferably in real-time. As the method updates, during method creation or editing, in simulation or actual execution, circular chart 460 is updated to provide feedback to the user regarding a status of the method. In practice, the column spoke plot can be rotated about the central axis with the zone or step plots remaining stationary to simulate or illustrate method execution. Alternatively, the zone or step plots can be co-rotated about their centers while the column spoke plot remains stationary. Movement of the column spoke plot represents the SMB principle of moving the chromatographic resin through the mobile phase zones. Movement of the zone or step plots represents the SMB principle of moving the mobile phase zones through the chromatographic resin. The rotation rate in either alternative is set so that a complete revolution of the rotating element occurs once every cycle of the method execution.

Referring to figure 4A, illustrations are provided showing the alternate rotation dynamic for columns and zones. In figure 4A, the cycle time is 2200 seconds, with illustrative snapshots being shown for 120 seconds and 440 seconds. Rotating the selected element in accordance with the cycle timing provides a synchronization of the progression of the method to permit the user to quickly and easily estimate when transitions for a given column will occur.

### Idle Step

The present disclosure provides a unique Idle step feature for conversion of FB methods to SMB methods. Prior to the Idle Step approach, users provided manual adjustments to step durations to close the cycle time. The manual adjustments represented a paradigm shift for the FB developers who were not familiar with SMB techniques, resulting in an often arduous process for the developers. Rather than force users to adjust step parameters to precisely match the cycle time, the methods and apparatus of the present disclosure contain a built-in Idle step that absorbs time from the last user step to the end of the cycle, for example. Columns in the Idle step are not connected to an input or output but rather sit idle until they progress out of that step into the next. The user interface allows the method to be entered such that the Idle step can be placed after any desired other step in the method. The ordering is user selectable. In typical situations, the Idle step is added after the step flowing the most innocuous solvent through the column (*e.g.* the Equilibration step). Another common scenario is for the Idle step to follow the cleaning step despite the fact that the cleaning solvent is generally the most aggressive of those used in the method. The benefit of the latter is that the column spends extra time cleaning. The choice is up to the user based on the specific application. The Idle step permits any FB method entered in the user interface to be immediately executable without user modification other than what would normally be made to perform an FB method.

One feature of the Idle step relates to Determining step duration, i.e., steps that have a duration that is determined by the separation process characteristics, which therefore tend to determine overall cycle time. Rather than having the user or the user interface algorithms calculate adjustments to non-Determining step durations during method design to properly close out the timing for an SMB cycle, an Idle step may be used. One feature of the Idle step is to permit the SMB method to have a duration that is an integral multiple of a designated Determining step. The Idle step simplifies the cyclic timing with respect to the different steps of the method to avoid problematic issues that may arise as a result of attempting to automatically adjust non-Determining step durations. The simplification provided by the Idle step also alleviates the user from the task of attempting to precisely adjust various steps in the method to close the cycle time. The Idle step therefore provides a tool that can be employed by novice SMB developers to obtain robust SMB methods that are readily optimized.

The method editor in the user interface checks the SMB method to verify the validity of the method execution with respect to cycle time. Thus, SMB methods created using the user interface and accompanying algorithms produce methods that have valid execution cycle times with respect to the specified method steps. The user may adjust the parameters of the method, including steps and step parameters, such as may be desirable to tend to reduce the cycle time. According to a feature of the method editor in the user interface, the Idle step time duration is automatically adjusted in response to method modifications made by the user. User modifications may sometimes be made to increase the duration of some steps, such as Cleaning and/or Equilibration, which can readily be accommodated using the Idle step. The overall cycle time for the method is the sum of the steps of the method plus the Idle step time duration. Accordingly, there is no cycle time penalty if the user wishes to extend certain steps and shorten an Idle step, where the extended steps might otherwise have been minimized in accordance with a corresponding FB method, for example, to maintain the FB method to be as short as possible. As long as the extended steps do not eliminate the Idle step, the overall method cycle time stays the same. The Idle step feature is particularly useful when converting FB methods to SMB methods, since timing discrepancies identified in the conversion can often be overcome using the Idle step.

Conversion Algorithm

The procedure for setting up a multi-column chromatography process includes obtaining several inputs and parameter values describing the process. For example, the product concentration in the feed solution (titer), the equilibrium binding capacity (static binding capacity) and the overall process sequence are input to the algorithmic procedure.

Processing time is chosen with regard to flow rate and overall continuous process time. A longer processing time can obtain lower flow rates, leading to a more compact system, while longer processing times may run the risk of scheduling conflicts or step violations, resulting in issues for product stability. The feed flow rate is a result of the volume that is to be processed and the processing time.

The algorithm begins with the determination of the minimum (simulated) transport rate of the chromatography media. The transport rate is determined based on permitting the binding of all product in the ideal case of no mass transfer resistance, i.e., ideal plug flow in the absence of other non-idealities. The minimum (simulated) transport rate of the chromatography media is equal to the total amount of product entering the system (feed flow rate multiplied by the titer) divided by the static or equilibrium binding capacity. Mass transfer resistance and other non-idealities can be accommodated with the simulated transport rate of chromatography media chosen to be above the minimum transport rate. Typically, a safety factor for mass transfer resistance and non-idealities prompts the selection of the transport rate of chromatography media to be about 5 to about 40% greater than the minimum transport rate.

The volume of chromatography media in the loading zone is dependant on the flow rate through the columns in the loading zone and the desired residence time. In case the flow behavior in the bed approaches plug flow behavior, the desired residence time mainly depends on mass transfer phenomena such as diffusion. The residence time, together with the safety factor included in the media transport rate, as discussed above, determine the capture efficiency. The capture efficiency increases as the safety factor is adjusted higher, i.e., with longer residence times. Capture efficiency can be linked to residence time and media transport rate in accordance with various models that are known to those skilled in the art. The relationships provided in these models can be used to determine the desired residence time for a given media transport rate and the desired capture efficiency. Knowing the required residence time and the feed flow rate, the desired resin volume and the loading zone can be calculated.

The number of columns for the loading zone is chosen based on method design parameters. Typically, to obtain the advantages of capacity utilization beyond the dynamic binding capacity and counter current processing, at least two columns are connected in series. Another minimum criteria for column selection may obtain a distribution of the incoming feed solution over at least two columns in parallel. By selecting at least two columns in parallel, the desired process can be operated with columns of smaller diameter without exceeding maximum flow rate limitations in the Loading zone. The distribution of the feed solution over at least two columns in parallel is also advantageous if the volume of feed solution per process cycle is more than twice the maximum volume in any other process steps. If the volume of feed solution per process cycle is more than three times the maximum volume in any of the other process steps, the use of 3 columns in parallel can be advantageous. Typically, parallel columns are desirable if the columns have a similar pressure-flow characteristic.

When two or more columns are connected in parallel in the First Pass of the Loading zone, at least the same number of columns should be employed in the Second Pass of the Loading zone. The total number of columns in the Loading zone would then equal the number of passes (with a minimum of two) multiplied by the number of columns in parallel.

After the flow rate in the Loading zone and the number of columns in parallel are determined, the linear velocity and column diameter can be selected. Preferably, the columns are selected to be as narrow as can be accommodated to operate with as high a linear velocity as feasible. Column diameters tend to be specified in particular sizes, so the column diameter is commonly chosen from the range of available column sizes. Once the column diameter is selected, the bed height can be calculated from the total number of columns in the Loading zone, the column diameter and the desired resin volume in the Loading zone. With these pieces of information, the Switch Time can be calculated, which is the volume of a single column divided by the simulated transport rate of chromatography media.

The minimum number of columns that is needed to serve all the steps in the given chromatography process is related to the cumulative volume of the steps in each process cycle and cross sectional area of the columns. The maximum volume that can be applied on a column during one Switch Time interval equals the maximum desired linear velocity multiplied by the cross sectional area of a single column. The minimum number of columns to meet the specification of all process steps to be applied on a column is equal to the total cumulative volume of the process steps in each process cycle in relation to the maximum volume that can be applied per Switch Time interval. Thus, the minimum total number of columns is equal to the number of columns in the load zone plus the minimum number of columns that are used for all other steps. The minimum of the total number of columns for the chromatography process is rounded up to an integral number of columns, while additional columns may be added to obtain a desired number of columns beyond the minimum. For example, it may be desirable to add extra columns to allow for counter current contact in the Elution zone. The counter current contact in the Elution zone may permit further optimization of the process performance without creating significant extra complexity.

The present disclosure provides rules for calculating appropriate flow rate or number of columns in series to supply designated liquid volume through each column in a zone with multiple columns. In addition, the present disclosure provides automatic flow rate compensation or compensation related to the number of columns in series within zones as the number of columns varies within a zone prior to the exhaustion of a Switch Time. The following nomenclature is used to describe the rules for providing the disclosed calculations.

V: the volume of liquid in a step, which is the volume of buffer that is pumped into each column once connected to a specified pump, irrespective of the number of subsequent columns in that step.
S: the average number of columns in a step. This variable is the same as the column residence time of each column in the particular step, expressed in terms of Switch Times.
t: the column residence time of each column in a particular step.
fl: the liquid flow rate in a particular step.
tsw: Switch Time, derived from the Determining steps.
t and S have the following relationship: t = S * tsw.

For non-Determining steps, calculations may be made for several different scenarios as follows.

(a): The user defines volume in terms of either ml or CV and flow rate in terms of ml/min, CV/hr or other convenient units. The maximum duration for each individual column that receives buffer directly equals tsw, so that the minimum flow rate should be V/tsw. In this case, the relationship between fl and V/tsw is checked to determine whether any of three potential situations apply:

(1) fl < V/tsw: In this case the user may adjust the liquid flow rate to obtain the minimum flow rate. If the liquid flow rate cannot be easily adjusted, the user can be prompted to consider adjusting the Determining steps to allow longer Switch Times, or to redefine the step such that the liquid is distributed over two columns in parallel. Redefining the step implies S > 2, since having two columns in parallel is generally not available with less than one pass.
(2) fl = V/tsw: In this case the user may define the average number of columns in the step (S) with the boundary condition that S ≥ 1.
(3) fl > V/tsw: In this case the pump is running for a portion of the Switch Time and S = (V/fl)/tsw. The user may not be able to set S, which variable can be calculated automatically.

(b): The user may define volume (V) and time (t). In this scenario, the specified time determines the number of columns (S) in the step or zone. The flow rate can thus be calculated as fl = V/min(t,tsw). If the time (t) is longer than the Switch Time, meaning that S > 1, the column receives fluid directly from the pump during one Switch Time. As a result, the flow rate is governed by the Switch Time instead of the Column Residence Time (t).
(c): The user defines the flow rate (fl) and the time (t). This situation is similar to that of (b), where the volume for the step is given as V = min(t,tsw) * fl.

Given these scenarios, S can be larger than 1 for non-Determining steps, in which case the user can define the step time separately. The step time can be set in terms of Switch Times, meaning that S = 1.

Entry and Conversion Algorithms

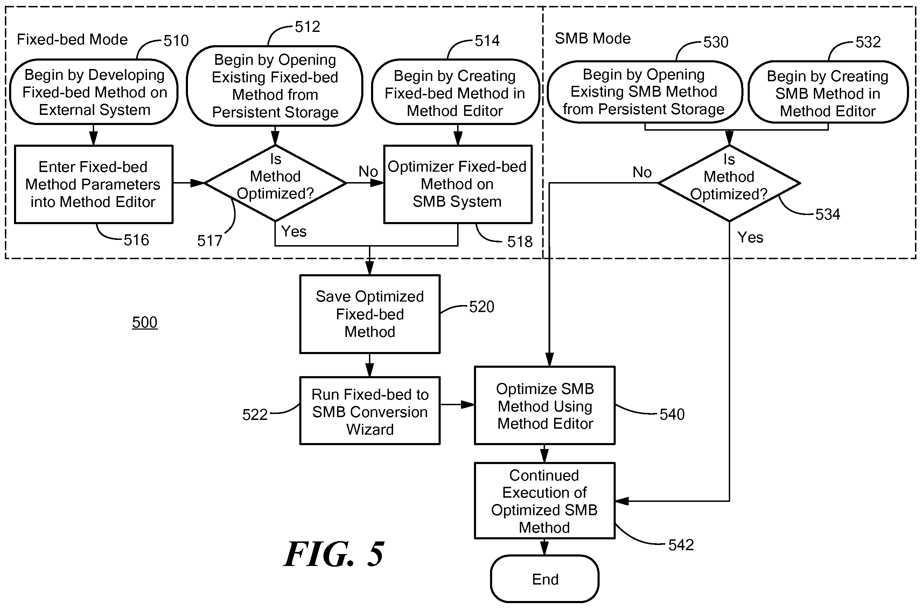

Referring now to Fig. 5, an algorithm for development of an SMB method using either FB mode or SMB mode is illustrated in flowchart 500. When designing a liquid chromatography method in fixed bed mode, three different starting points can be used. Block 510 illustrates the development of an FB method on a system that is external to the system hosting the method editor and user interface of the present disclosure. Block 512 illustrates the initiation of a method design by using an existing FB method that might be stored, e.g., in persistent storage. Block 514 illustrates the creation of an FB method in the method editor of the present disclosure. In a case of initiating a fixed bed method as illustrated in block 510, the user may enter FB method parameters developed on the external system into the method editor of the present disclosure, as illustrated in block 516.

Once the FB method parameters are entered into the method editor of the present disclosure, a decision block 517 illustrates the determination of whether the method is optimized. Decision block 517 is also entered from block 512 after accessing an FB method from storage. If the FB method is not optimized, the No branch of decision block 517 is taken to block 518, which illustrates the optimization of the FB method for an SMB system. If the FB method is optimized, as determined in decision block 517, the Yes branch is taken to block 520, which block is also arrived at after optimization as illustrated in block 518. Block 520 illustrates the optimized FB method being saved in storage to preserve the optimized FB method specification. The process then continues to block 522, which illustrates the processing of the FB method specification to obtain an SMB method specification. The processing of the FB method illustrated in block 522 can be provided as discussed above with respect to algorithms available in the user interface and method editor. Processing continues to block 540, which illustrates the optimization of the SMB method using the method editor of the user interface of the present disclosure. Processing continues to block 542 which illustrates that the optimized SMB method is ready for routine execution on an SMB liquid chromatography apparatus.

Flowchart 500 also illustrates entry of an SMB method in SMB mode, which is initiated at block 530 or 532. Block 530 illustrates the initiation of an SMB method by obtaining a stored SMB method, e.g., by accessing persistent storage. Alternately, block 532 illustrates initiating an SMB method through the method editor of the user interface, which permits entry of SMB method parameters to describe an SMB method specification. Blocks 530 and 532 arrive at decision block 534, which illustrates the determination of whether the SMB method is optimized. If the method is optimized, the process continues to block 542, which provides for an optimized SMB method ready for execution on an SMB liquid chromatography apparatus. If the method is not optimized, as determined in step 534, processing continues on the No branch to block 540 where the SMB method is optimized using the method editor of the user interface. Once the SMB method is optimized in block 540, processing continues to block 542 where the SMB method is ready for routine execution on an SMB liquid chromatography apparatus.

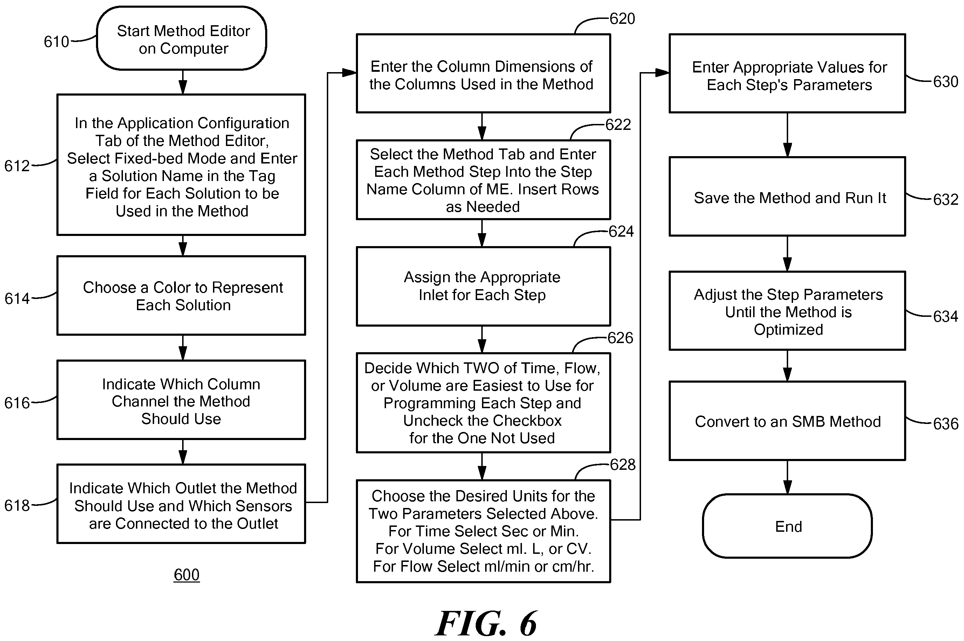

Referring now to Fig. 6, a more specific process for entering FB method parameters in the method editor of the user interface for conversion to an SMB method is illustrated with flowchart 600. The procedure begins with block 610 with the method editor available through the user interface of a given computer system. The computer system may be coupled to or integral with a liquid chromatography apparatus, or may be a stand alone system or connectible to the liquid chromatography apparatus through a network or other media transfer techniques, such as diskette, flash card, CD, DVD and any other type of media transfer system that might be used with a liquid chromatography apparatus. In general, the output of the procedure illustrated in flowchart 600 is a control profile, which can be in the form of a data file that can be stored for later use, or provided to or directly applied to a liquid chromatography apparatus. For example, the data file may be the result of development on a separate computer system, and transferred over a communication link to the liquid chromatography apparatus. Alternately, or in addition, the liquid chromatography apparatus can host a computer system on which the disclosed systems and methods are implemented to permit direct application of an output control profile to the apparatus.

In block 612, FB mode is selected and identifiers for each of the solutions that are to be used in the method are provided in tag fields available in the method editor. In block 614, the user may choose different colors to represent the different solutions available in the FB method. Block 616 indicates the column channel for which the method is designated. Block 618 illustrates the availability in the method editor for indicating which outlet the method should use and which sensors should be connected to the outlet. Block 620 illustrates the entry of column dimensions of the columns used in the FB method. Block 622 illustrates the entry of method steps with names being provided to each of these steps. The method editor permits rows to be inserted as desired to indicate additional steps for the method. Block 624 illustrates the assignment of the appropriate inlet for each of the specified steps. Block 626 illustrates the entry of any two of the parameters of time, flow or volume, typically being selected based on convenience. The parameters are entered for the two out of the three parameters, and the unused parameter can be indicated by unchecking a box corresponding to the unused parameter. Block 628 illustrates the choice of units for the two of three parameters selected in block 626. Time can be selected to be entered in terms of seconds or minutes. Volume can be selected for entry in terms of milliliters, liters or CV. Flow parameters can be entered in terms of milliliters/min or cm/hr.

Block 630 of flowchart 600 illustrates the entry of appropriate values for each of the parameters related to each given step of the method. Block 632 illustrates the storage of the entered method steps and parameters and the ability to simulate a method run based on the entered steps and parameters. Block 634 illustrates the process of adjusting step parameters until the specified method is optimized in the view of the user. Once the FB method is optimized in accordance with the design criteria of the user, the method editor permits conversion of the FB method to an SMB method, as illustrated in block 636.

Flowchart 600 thus illustrates the entry of an FB method into the method editor of the user interface of the present disclosure, optimization of the entered method, and conversion of the FB method to an SMB method. Conversion of the FB method to the SMB method occurs in accordance with algorithms provided in the user interface as described above.

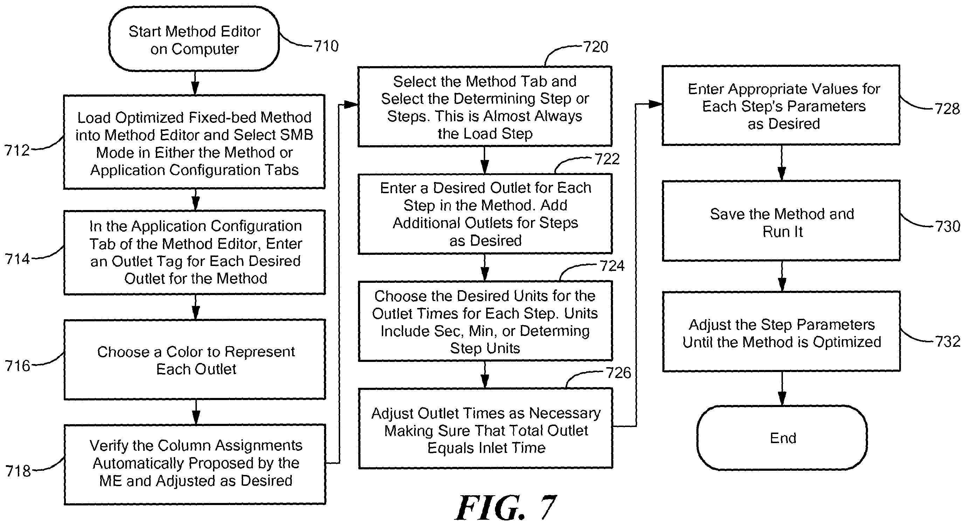

Referring now to Fig. 7, a flowchart 700 illustrates conversion of an FB method to an SMB method. The process illustrated in flowchart 700 begins at block 710, where the editor is initiated on the host computer.

In block 712, an optimized FB method is loaded into the method editor in the user interface and SMB mode is selected. In block 714, outlets are identified with desired names selected by the user for each outlet used in the method. Block 716 illustrates the ability of the user to choose a color provided by the user interface to represent each outlet. Block 718 illustrates the assignment of columns for the various steps of the method, and the verification and/or adjustment of the column assignment as desired by the user. The column assignment can initially be set by the algorithms provided by the user interface, and can be automatically adjusted through changes made to relevant parameters of the method, or can be adjusted manually as desired by the user.

Block 720 illustrates the assignment of a Determining step or steps, which is typically the Load step. The assignment of a Determining step can be conducted automatically using algorithms provided by the user interface, or can be implemented by the user as desired. Block 722 illustrates the assignment of an outlet for each of the steps in the method. Additional outlets for each of the steps can be designated as desired by the user. Block 724 illustrates the selection of desired units for the outlet times for each step. The outlet times can be specified in terms of seconds, minutes or Determining step units. Block 726 illustrates the adjustment of the totality of outlet times for a given step to match the inlet time. The adjustment of outlet times for a given step can be controlled by the user, or can be set automatically by the method editor of the user interface.

Block 728 illustrates the entry of parameter values for each of the given steps in the method, as is discussed in greater detail above. Block 730 illustrates storage of the method, and the ability to run a simulation of the method. Block 732 illustrates modification of the various step parameters as a result of running the simulation of the method to optimize the method steps and overall method cycle.

Column Connection Diagram

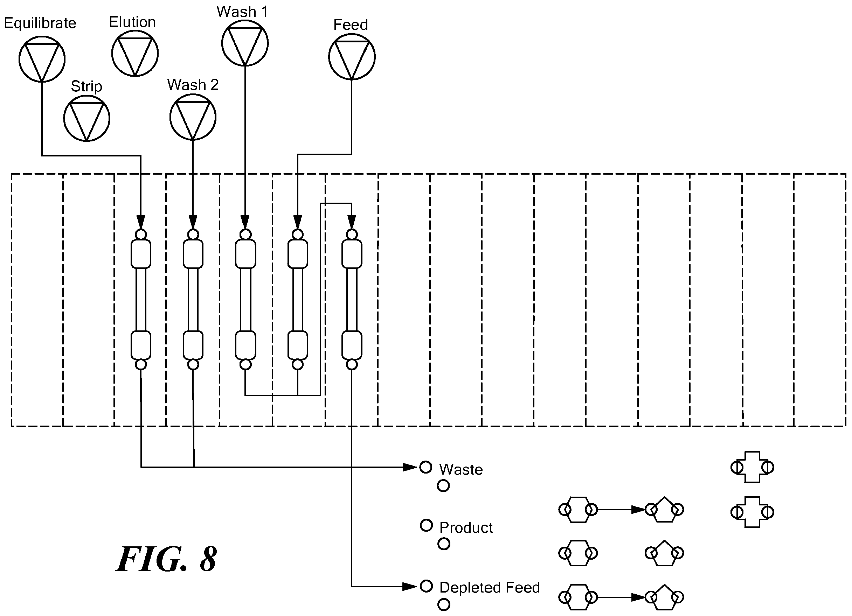

Referring now to Fig. 8, the present disclosure provides a column connection diagram to assist the user with the physical connections used in properly executing the SMB method. The algorithms discussed above that are used for automatic method conversion include automatic calculation of series and parallel columns for each step, automatic adjustment of the plumbing to accommodate multiple columns in the same phase and allowing multiple outlets for each step. The column connection diagram of Fig. 8 can be viewed as a "wizard" that assists a user in designating the SMB plumbing configuration to be used based on the input at the method. The algorithm used to form the column connection diagram uses the various buffers designated as part of the FB method entries as a basis for determining the SMB system resources to be used. The algorithm provides a first-pass proposal for assigning system resources to the method based on rules that are built into the method editor, as discussed above. The user can modify the first-pass resource assignment proposal in accordance with the specific needs of the user. The algorithm provides feedback if the modifications cause resource inconsistencies.

One feature of SMB is that each step can have a different number of columns. The present disclosure provides a tool that automatically calculates the number of columns in series and parallel for each of the steps. Columns are placed in parallel in response to step flow rates greater than the designated maximum allowable flow rate for the columns. The minimum integral number of columns are placed in parallel to obtain a flow rate through total number of columns that is below the maximum rate allowable. Columns are placed in series to alleviate situations where the calculated residence time falls below the designated residence time for that step (as indicated in table column 418 of Fig. 4). The algorithm calculates the minimum number of columns that should be placed in series to accommodate the designated residence time. Columns in series do not have to be an integral number, as illustrated in table column 418 of Fig. 4.

The cycle time of a given SMB method is calculated by multiplying the number of columns in the method by the calculated Switch Time. Switch Time in turn is derived by dividing the rate limiting step time (Switch Time step(s) as designated in table column 410) by the number of columns in that step. Hence, the cycle time is a determined value, and the total SMB process time matches the cycle time in an executable method.

Using the methods and apparatus of the present disclosure, there are no restrictions to allowing two or more columns from being in the same chromatographic phase during the course of executing an SMB Method. The input table of the invention does not require any special adjustments by the user for this situation and the circular chart need not indicate anything unusual concerning the situation. The algorithms of the present disclosure automatically adjust the system plumbing to put the correct columns in series for the appropriate amount of time. The default rule for ambiguous plumbing situations is to put columns in series rather than in parallel. Users are able to modify the default plumbing during optimization.

The operations herein depicted and/or described herein are purely exemplary and imply no particular order. Further, the operations can be used in any sequence when appropriate and can be partially used. With the above embodiments in mind, it should be understood that they can employ various computer-implemented operations involving data transferred or stored in computer systems. These operations are those requiring physical manipulation of physical quantities. Usually, though not necessarily, these quantities take the form of electrical, magnetic, or optical signals capable of being stored, transferred, combined, compared and otherwise manipulated.

Any of the operations depicted and/or described herein that form part of the embodiments are useful machine operations. The embodiments also relate to a device or an apparatus for performing these operations. The apparatus can be specially constructed for the required purpose, or the apparatus can be a general-purpose computer selectively activated or configured by a computer program stored in the computer. In particular, various general-purpose machines employing one or more processors coupled to one or more computer readable medium, described below, can be used with computer programs written in accordance with the teachings herein, or it may be more convenient to construct a more specialized apparatus to perform the required operations.

The disclosed systems and methods can also be embodied as computer readable code on a computer readable medium. The computer readable medium is any data storage device that can store data, which can be thereafter be read by a computer system. Examples of the computer readable medium include hard drives, read-only memory, random-access memory, CD-ROMs, CD-Rs, CD-RWs, magnetic tapes and other optical and non-optical data storage devices. The computer readable medium can also be distributed over a network-coupled computer system so that the computer readable code is stored and executed in a distributed fashion.

The foregoing description has been directed to particular embodiments of this disclosure. It will be apparent, however, that other variations and modifications may be made to the described embodiments, with the attainment of some or all of their advantages. The procedures, processes and/or modules described herein may be implemented in hardware, software, embodied as a computer-readable medium having program instructions, firmware, or a combination thereof. For example, the function described herein may be performed by a processor executing program instructions out of a memory or other storage device.

**Claims**

1. A system for automatically adapting fixed-bed chromatography procedures to operate in a continuous simulated moving bed (SMB) liquid chromatography process setting, comprising:

   - a processor communicatively coupled to a storage memory to access and execute instructions stored in the storage memory, the processor being operative to execute instructions to:
   - provide a user interface operative to accept input values of one or more of time, volume or flow rate for a number of chromatography phases to define a liquid chromatography process in fixed bed (FB) process mode;
   - process the input values to define the SMB liquid chromatography process, including: defining a number of columns (412, 414, 416) in parallel or series for use in the SMB liquid chromatography process; and
   - defining the SMB liquid chromatography process by calculating one or more of time, volume or flow rate for the one or more number of columns thereby defining chromatography phases in an SMB process mode that include inlet and outlet specifications for the columns that specify an associated buffer solution as inlet and one or more available destinations as outlet;
   - wherein at least one of the chromatography phases (430; 442) in the SMB process mode is an idle phase such that any column in the idle phase is inactive and is not connected to an input or output, the idle phase representing a pause or timing interval between one or more chromatography phases to obtain a desired step timing for a cyclical SMB method.

2. The system according to claim 1, wherein the processor is further operative to store a control profile in the storage memory, the control profile representing the SMB liquid chromatography process.

3. The system according to claim 1, wherein the user interface further comprises a display (312) including a tabular component for entry of liquid chromatography parameters.

4. The system according to claim 1, wherein the user interface further comprises a display (312) including a circular chart (460) with at least two concentric rings (462, 464), each ring indicating respective inlet or outlet zones of the SMB liquid chromatography process wherein each ring (462, 464) indicates at least two chromatography phases, each chromatography phase being defined as an arc in the respective ring; wherein the circular chart includes radial lines to indicate column boundaries in relation to the at least two rings and wherein the processor is operative to update the display (312) to cause the circular chart (460) to illustrate execution of the SMB liquid chromatography method.

5. The system according to claim 4, wherein the circular chart (460) illustrates execution of the SMB liquid chromatography process by co-rotating the rings or by rotating the radial lines.

6. The system according to any of claims 4 to 5, wherein the processor is operative to update the display (312) in real-time to provide feedback regarding a status of the SMB liquid chromatography method.

7. The system according to any of claims 1 to 6, wherein the user interface permits adjustment of parameters for the liquid chromatography method.

8. A method executed on a numerical computation device for obtaining a simulated moving bed (SMB) liquid chromatography process, comprising:

   - obtaining liquid chromatography parameter input values of one or more of time, volume or flow rate for a number of chromatography phases to define a liquid chromatography process in a fixed bed (FB) process mode;
   - processing the parameter input values, including defining a number of columns (412, 414, 416) in parallel or series for use in the SMB liquid chromatography process;
   - defining the SMB liquid chromatography process by calculating one or more of time, volume or flow rate for the one or more number of columns thereby defining chromatography phases in an SMB process mode that include inlet and outlet specifications for the columns that specify an associated buffer solution as inlet and one or more available destinations as outlet; and
   - defining at least one of the chromatography phases (430; 442) of the SMB process mode as an idle phase, such that any column in the idle phase is inactive and is not connected to an input or output, the idle phase representing a pause or timing interval between one or more chromatography phases to obtain a desired step timing for a cyclical SMB method.

9. The method according to claim 8, further comprising generating a control profile representing the SMB liquid chromatography method.

10. The method according to claim 8 or 9, further comprising displaying a circular chart (460) with at least two concentric rings (462, 464), each ring indicating respective inlet or outlet zones of the SMB liquid chromatography method.

11. The method according to claim 10, further comprising displaying radial lines on the circular chart (460) to indicate column boundaries in relation to the at least two rings.

12. The method according to claim 11, further comprising indicating a status of the SMB liquid chromatography method using the circular chart.

13. The method according to claim 12, further comprising updating the display (312) in real-time to provide feedback regarding a status of the SMB liquid chromatography method.

14. The method according to claim 8, further comprising defining a determining step for the SMB liquid chromatography method, wherein the determining step tends to define an overall cycle time for the SMB liquid chromatography method.

**Patentansprüche**

1. System zum automatischen Anpassen von Festbett-Chromatographieverfahren, um in einer kontinuierlichen Simulated-Moving-Bed-(SMB-)-Flüssigchromatographie-Prozessumgebung zu arbeiten, umfassend:

   - einen Prozessor, welcher kommunikationswirksam mit einem Speicher gekoppelt ist, um auf in dem Speicher gespeicherte Anweisungen zuzugreifen und diese auszuführen, wobei der Prozessor ausgebildet ist, Anweisungen auszuführen, um:
   - eine Benutzerschnittstelle bereitzustellen, welche dazu ausgebildet ist, Eingabewerte von einer oder mehreren der Größen Zeit, Volumen oder Flussrate für eine Anzahl von Chromatographiephasen zu akzeptieren, um einen Flüssigchromatographieprozess in einem Festbett-(FB-)Prozessmodus zu definieren;
   - die Eingabewerte zu verarbeiten, um den SMB-Flüssigchromatographieprozess zu definieren, umfassend: Definieren einer Anzahl von Säulen (412, 414, 416) in Parallelschaltung oder Reihenschaltung zur Verwendung in dem SMB-Flüssigchromatographieprozess; und um
   - den SMB-Flüssigchromatographieprozess zu definieren durch Berechnen einer oder mehrerer der Größen Zeit, Volumen oder Flussrate für die eine oder die mehreren Säulen, wodurch Chromatographiephasen in einem SMB-Prozessmodus definiert werden, welche Eingangs- und Ausgangsspezifikationen für die Säulen umfassen, die eine zugeordnete Pufferlösung als Eingang und ein oder mehrere verfügbare Ziele als Ausgang spezifizieren;
   - wobei mindestens eine der Chromatographiephasen (430; 442) in dem SMB-Prozessmodus eine Leerlaufphase ist, derart, dass eine in der Leerlaufphase befindliche Säule inaktiv und nicht mit einem Eingang oder Ausgang verbunden ist, wobei die Leerlaufphase eine Pause oder ein Zeit-Intervall zwischen einer oder mehreren Chromatographiephasen repräsentiert, um eine gewünschte zeitliche Schrittfolge für ein zyklisches SMB-Verfahren zu erhalten.

2. System nach Anspruch 1, wobei der Prozessor ferner dazu ausgebildet ist, ein Kontrollprofil in dem Speicher zu speichern, wobei das Kontrollprofil den SMB-Flüssigchromatographieprozess repräsentiert.

3. System nach Anspruch 1, wobei die Benutzerschnittstelle ferner eine Anzeige (312) umfasst, welche eine Tabellenkomponente zur Eingabe von Flüssigchromatographieparametern umfasst.

4. System nach Anspruch 1, wobei die Benutzerschnittstelle ferner eine Anzeige (312) umfasst, welche ein Kreisdiagramm (460) mit mindestens zwei konzentrischen Ringen (462, 464) umfasst, wobei jeder Ring jeweilige Eingangs- oder Ausgangszonen des SMB-Flüssigchromatographieprozesses angibt, wobei jeder Ring (462, 464) mindestens zwei Chromatographiephasen angibt, wobei jede Chromatographiephase als ein Bogen in dem jeweiligen Ring definiert ist; wobei das Kreisdiagramm radiale Linien umfasst, um Säulengrenzen in Bezug auf die mindestens zwei Ringe anzugeben, und wobei der Prozessor dazu ausgebildet ist, die Anzeige (312) zu aktualisieren, um zu bewirken, dass das Kreisdiagramm (460) die Ausführung des SMB-Flüssigchromatographieverfahrens darstellt.

5. System nach Anspruch 4, wobei das Kreisdiagramm (460) die Ausführung des SMB-Flüssigchromatographieprozesses darstellt durch gemeinsames Drehen der Ringe oder durch Drehen der radialen Linien.

6. System nach einem der Ansprüche 4 bis 5, wobei der Prozessor dazu ausgebildet ist, die Anzeige (312) in Echtzeit zu aktualisieren, um Feedback hinsichtlich eines Status des SMB-Flüssigchromatographieverfahrens bereitzustellen.

7. System nach einem der Ansprüche 1 bis 6, wobei die Benutzerschnittstelle die Einstellung von Parametern für das Flüssigchromatographieverfahren erlaubt.

8. Verfahren, welches auf einer numerischen Recheneinrichtung ausgeführt wird, zum Erhalt eines Simulated-Moving-Bed-(SMB-)Flüssigchromatographie-Prozesses, umfassend:

   - Erhalt von Flüssigchromatographie-Parametereingabewerten von einer oder mehreren der Größen Zeit, Volumen oder Flussrate für eine Anzahl von Chromatographiephasen, um einen Flüssigchromatographieprozess in einem Festbett-(FB-)Prozessmodus zu definieren;
   - Verarbeiten der Parametereingabewerte, umfassend: Definieren einer Anzahl von Säulen (412, 414, 416) in Parallelschaltung oder Reihenschaltung zur Verwendung in dem SMB-Flüssigchromatographieprozess;
   - Definieren des SMB-Flüssigchromatographieprozesses durch Berechnen einer oder mehrerer der Größen Zeit, Volumen oder Flussrate für die eine oder die mehreren Säulen, wodurch Chromatographiephasen in einem SMB-Prozessmodus definiert werden, welche Eingangs- und Ausgangsspezifikationen für die Säulen umfassen, die eine zugeordnete Pufferlösung als Eingang und ein oder mehrere verfügbare Ziele als Ausgang spezifizieren; und
- Definieren mindestens einer der Chromatographiephasen (430; 442) des SMB-Prozessmodus als eine Leerlaufphase, derart, dass eine in der Leerlaufphase befindliche Säule inaktiv und nicht mit einem Eingang oder Ausgang verbunden ist, wobei die Leerlaufphase eine Pause oder ein Zeit-Intervall zwischen einer oder mehreren Chromatographiephasen repräsentiert, um eine gewünschte zeitliche Schrittfolge für ein zyklisches SMB-Verfahren zu erhalten.

9. Verfahren nach Anspruch 8, ferner umfassend: Generieren eines Kontrollprofils, welches das SMB-Flüssigchromatographieverfahren repräsentiert.

10. Verfahren nach Anspruch 8 oder 9, ferner umfassend: Anzeigen eines Kreisdiagramms (460) mit mindestens zwei konzentrischen Ringen (462, 464), wobei jeder Ring jeweilige Eingangs- oder Ausgangszonen des SMB-Flüssigchromatographieverfahrens angibt.

11. Verfahren nach Anspruch 10, ferner umfassend: Anzeigen von radialen Linien auf dem Kreisdiagramm (460), um Säulengrenzen in Bezug auf die mindestens zwei Ringe anzugeben.

12. Verfahren nach Anspruch 11, ferner umfassend: Angeben eines Status des SMB-Flüssigchromatographieprozessverfahrens unter Verwendung des Kreisdiagramms.

13. System nach Anspruch 12, ferner umfassend: Aktualisieren der Anzeige (312) in Echtzeit, um Feedback hinsichtlich eines Status des SMB-Flüssigchromatographieverfahrens bereitzustellen.

14. System nach Anspruch 8, ferner umfassend: Definieren eines Bestimmungsschrittes für das SMB-Flüssigchromatographieverfahren, wobei der Bestimmungsschritt dazu tendiert, eine Gesamtzykluszeit für das SMB-Flüssigchromatographieverfahren zu definieren.

**Revendications**

1. Système d'adaptation automatique de procédures chromatographiques à lit fixe afin qu'elles fonctionnent pendant le réglage d'un processus de chromatographie liquide continu à lit mobile simulé (SMB), comprenant :

- un processeur relié en communication à une mémoire de stockage afin d'accéder à et d'exécuter des instructions stockées dans la mémoire de stockage, le processeur étant capable d'exécuter des instructions afin :

- d'offrir une interface utilisateur capable d'accepter des valeurs d'entrée d'une ou plusieurs d'une durée, d'un volume ou d'un débit pour un nombre de phases de chromatographie afin de définir un processus de chromatographie liquide en mode de traitement à lit fixe (FB) ;

- de traiter les valeurs d'entrée afin de définir le processus de chromatographie liquide SMB, avec : la définition d'un nombre de colonnes (412, 414, 416) en parallèle ou en série afin de les utiliser pendant le processus de chromatographie liquide SMB ; et

- la définition du processus de chromatographie liquide SMB en calculant une ou plusieurs d'une durée, d'un volume ou d'un débit de la ou des colonne (s), afin de définir les phases de chromatographie dans un mode de traitement SMB qui comprennent des spécifications d'entrée et de sortie pour les colonnes qui spécifient une solution tampon associée comme entrée, et une ou plusieurs destination(s) disponible(s)comme sortie ;

- dans lequel au moins l'une des phases de chromatographie (430 ; 442) en mode de traitement SMB est une phase de repos de sorte que n'importe quelle colonne en phase de repos soit inactive et ne soit pas reliée à une entrée ou une sortie, la phase de repos représentant une pause ou un intervalle de temps entre une ou plusieurs phase(s) de chromatographie afin d'obtenir une temporisation souhaitée pour un procédé SMB cyclique.

2. Système selon la revendication 1, dans lequel le processeur est en outre capable de stocker un profil de commande dans la mémoire de stockage, le profil de commande représentant le processus de chromatographie liquide SMB.

3. Système selon la revendication 1, dans lequel l'interface utilisateur comprend en outre un écran (312) comprenant un composant tabulaire permettant la saisie de paramètres de chromatographie liquide.

4. Système selon la revendication 1, dans lequel l'interface utilisateur comprend en outre un écran (312) comprenant un graphique circulaire (460) avec au moins deux anneaux concentriques (462, 464), chaque anneau indiquant les zones d'entrée et de sortie respectives du processus de chromatographie liquide SMB, chaque anneau (462, 464) indiquant au moins deux phases de chromatographie, chaque phase de chromatographie étant définie comme un arc dans l'anneau respectif ; dans lequel le graphique circulaire comprend des lignes radiales destinées à indiquer les limites de colonnes en lien avec les deux anneaux au moins, et dans lequel le processeur est capable d'actualiser l'écran (312) afin que le graphique circulaire (460) illustre l'exécution du processus de chromatographie liquide SMB.

5. Système selon la revendication 4, dans lequel le graphique circulaire (460) illustre l'exécution du processus de chromatographie liquide SMB en tournant conjointement les anneaux ou en tournant les lignes radiales.

6. Système selon l'une quelconque des revendications 4 à 5, dans lequel le processeur est capable d'actualiser l'écran (312) en temps réel afin de fournir un retour sur le statut du processus de chromatographie liquide SMB.

7. Système selon l'une quelconque des revendications 1 à 6, dans lequel l'interface utilisateur permet de régler les paramètres du procédé de chromatographie liquide.

8. Procédé exécuté sur un dispositif de calcul numérique afin d'obtenir un processus de chromatographie liquide à lit simulé (SMB), comprenant :

- l'obtention des valeurs d'entrée de paramètres de chromatographie liquide d'un ou plusieurs d'une durée, d'un volume ou d'un débit pour un nombre de phases de chromatographie afin de définir un processus de chromatographie liquide en mode de traitement à lit fixe (FB) ;

- le traitement des valeurs d'entrée des paramètres, y compris la définition d'un nombre de colonnes (412, 414, 416) en parallèle ou en série destinées à être utilisées pendant le processus de chromatographie liquide SMB ;

- la définition du processus de chromatographie liquide SMB en calculant une ou plusieurs d'une durée, d'un volume ou d'un débit d'une ou plusieurs des colonnes, afin de définir les phases de chromatographie en mode de traitement SMB, qui comprennent des spécifications d'entrée et de sortie pour les colonnes qui spécifient une solution tampon associée comme entrée, et une ou plusieurs destination(s) disponible(s) comme sortie ;

- la définition d'au moins l'une des phases de chromatographie (430 ; 442) du mode de traitement SMB comme une phase de repos, de sorte que n'importe quelle colonne en phase de repos soit inactive et ne soit pas reliée à une entrée ou une sortie, la phase de repos représentant une pause ou un intervalle de temps entre une ou plusieurs phase(s) de chromatographie afin d'obtenir une temporisation souhaitée pour un procédé SMB cyclique.

9. Procédé selon la revendication 8, comprenant en outre la génération d'un profil de commande représentant le procédé de chromatographie liquide SMB.

10. Procédé selon la revendication 8 ou 9, comprenant en outre l'affichage d'un graphique circulaire (460) comprenant au moins deux anneaux concentriques (462, 464), chaque anneau indiquant les zones d'entrée et de sortie respectives du procédé de chromatographie liquide SMB.

11. Procédé selon la revendication 10, comprenant en outre l'affichage de lignes radiales sur le graphique circulaire (460), destinées à indiquer les limites des colonnes en lien avec les deux anneaux au moins.

12. Procédé selon la revendication 11, comprenant en outre l'indication d'un statut du procédé de chromatographie liquide SMB à l'aide du graphique circulaire.

13. Procédé selon la revendication 12, comprenant en outre l'actualisation de l'écran (312) en temps réel afin de fournir un retour sur le statut du procédé de chromatographie liquide SMB.

14. Procédé selon la revendication 8, comprenant en outre la définition d'une étape de détermination du procédé de chromatographie liquide SMB, l'étape de détermination ayant tendance à définir un temps de cycle global pour le procédé de chromatographie liquide SMB.

Strip, 3 CV  Elute, 4 CV  Wash, 8 CV  Load, 20 CV  Equilibrate, 5CV

Method

Flow and Time

## FIG. 1

Column 1

Clean  Equilibrate

Elute

Column 5  Column 2

Phase Rotation

Wash  Load

Column 4  Column 3

## FIG. 2

EP 2 488 267 B1

BioSMB Method Editor Version 1.0

Method | Application Configuration

| Step Name | Det. | Inlet Name | E | Volume | Units | E | Flow Rate | Units | E | Time | Units | Minimum Resistence Time (min) | S | P | Outlet Name | | Outlet Duration | Units | Linear Velocity (cm/hr) |
|---|---|---|---|---|---|---|---|---|---|---|---|---|---|---|---|---|---|---|---|
| Determining Step | ☑ | Inlet 1 | ☑ | 2.95 | CV | | 0.14 | ml/min | ☑ | 10.00 | seconds | 0.00 | 1.00 | 1.00 | Outlet 1 | ▼ | 10.00 | seconds | 1,060.288 |
| Non-Determining Step | | Inlet 2 | | 2.95 | CV | | 0.14 | ml/min | | 10.00 | seconds | 0.00 | 1.00 | 1.00 | Outlet 2 | ▼ | 10.00 | seconds | 1,060.288 |

C1

Inlet 2   Outlet 2   Outlet 1   Inlet 1

Maximum Flow Rate/ Linear Velocity   0.000   ml/min ▼

Switch Time   10   sec

Cycle Time   20   sec

Number of Columns   2

○ Fixed-bed Mode

● BioSMB Mode

Open Method   New Method

Save Method   Save Method As

Generate Admiral Method   About BioSMB Method Editor

SMB Mode

314   312

*FIG. 3A*

BioSMB Method Editor Version 1.0 — □ ☒

Method | Application Configuration

| Step Name | Det. | Inlet Name | E | Volume | Units | E | Flow Rate | Units | E | Time | Units | Minimum Resistence Time (min) |
|---|---|---|---|---|---|---|---|---|---|---|---|---|
| Determining Step | ☑ | Inlet 1 | ☑ | 2.95 | CV | | 0.14 | ml/min | ☑ | 10.00 | seconds | 0.00 |

Maximum Flow Rate/ Linear Velocity  [ 0.000 ] [ ml/min ▼ ]

[ Open Method ]   [ New Method ]

[ Save Method ]   [ Save Method As ]

[ Generate Admiral Method ]   [ About BioSMB Method Editor ]

● Fixed-bed Mode
○ BioSMB Mode

Fixed-bed Mode

*FIG. 3B*

310

EP 2 488 267 B1

Column Properties
Diameter 12.50 mm
Length 150.00 mm
Maximum Flow Rate 25.00 ml/mm
Column Volume 18.41 ml

Time (sec)
Switch Time 441.84 sec
Cycle Time 2209.20 sec
Col Senes 5.00
Col Parallel 0.00

| A | B | C | D | E | F | G | H | I | J | K | L | M | N | O | P | Q | R | S | T | U | V | BS |
|---|---|---|---|---|---|---|---|---|---|---|---|---|---|---|---|---|---|---|---|---|---|---|

| | Switch Time | | | Step Name | Inlet Number | | Volume | Units | | Flow Rate | Units | | Time | Units | Min Residence Time (sec) | S | P | Outlet Name | Outlet Number | Duration | Units |
|---|---|---|---|---|---|---|---|---|---|---|---|---|---|---|---|---|---|---|---|---|---|
| 430 | Yes | | | Second Pass | 8 | O | 10.00 | CV | O | 25 | ml/min | X | 7.36 | Minutes | 0 | 1 | 0 | Depleted Feed | 12 | 10.00 | CV |
| | | | | | | | | | | | | | | | | | | Add Outlet | | 0.00 | CV |
| 432 | Yes | Ins | Del | Load | 1 | O | 10.00 | CV | O | 25 | ml/min | X | 7.36 | Minutes | 0 | 1 | 0 | Second Pass | 15 | 10.00 | CV |
| | | | | | | | | | | | | | | | | | | Add Outlet | | 0.00 | CV |
| 434 | No | Ins | Del | Wash 1 | 2 | O | 8.00 | CV | O | 25 | ml/min | X | 5.89 | Minutes | 0 | 0.8 | 0 | Second Pass | 15 | 1.00 | CV |
| | | | | | | | | | | | | | | | | Ins | Del | Waste | | 7.00 | CV |
| | | | | | | | | | | | | | | | | | | Add Outlet | | 0.00 | CV |
| 436 | No | Ins | Del | Wash 2 | 3 | O | 3.00 | CV | O | 25 | ml/min | X | 2.21 | Minutes | 0 | 0.3 | 0 | Waste | 10 | 3.00 | CV |
| | | | | | | | | | | | | | | | | | | Add Outlet | | 0.00 | CV |
| 438 | No | Ins | Del | Elute | 4 | O | 5.00 | CV | O | 25 | ml/min | X | 3.68 | Minutes | 0 | 0.5 | 0 | Waste | 10 | 1.00 | CV |
| | | | | | | | | | | | | | | | | Ins | Del | Product | | 3.00 | CV |
| | | | | | | | | | | | | | | | | Ins | Del | Waste | | 1.00 | CV |
| | | | | | | | | | | | | | | | | | | Add Outlet | | 0.00 | CV |
| 440 | No | Ins | Del | Strip | 5 | O | 3.00 | CV | O | 25 | ml/min | X | 2.21 | Minutes | 0 | 0.3 | 0 | Waste | 10 | 3.00 | CV |
| | | | | | | | | | | | | | | | | | | Add Outlet | | 0.00 | CV |
| 442 | No | Ins | Del | Equilibrate | 6 | O | 6.00 | CV | O | 25 | ml/min | X | 4.42 | Minutes | 0 | 0.6 | 0 | Waste | 10 | 6.00 | CV |
| | | | | | | | | | | | | | | | | | | Add Outlet | | 0.00 | CV |
| | | | | Add Step | | | | | | | | | | | | | | | | | |
| | No | | | Idle | | | | | | | | | 3.68 | Minutes | | 0.5 | | Idle | | 3.68 | Minutes |

410 412 414 416 418 420

450 456 460 452 462 464

*FIG. 4*

Cycle Time = 2200 seconds

Columns Moving Through Zones

*FIG. 4A-1*

EP 2 488 267 B1

**FIG. 4A-2**

Zones Moving Through Columns

*FIG. 5*

```
        ┌─────────────────┐
  610 ─ │  Start Method Editor  │
        │   on Computer    │
        └─────────────────┘
                 │
                 ▼
┌──────────────────────────┐        ┌──────────────────────────┐ 620      ┌──────────────────────────┐
│  In the Application Configuration │        │  Enter the Column Dimensions of │          │  Enter Appropriate Values for │ ─ 630
│  Tab of the Method Editor,       │        │  the Columns Used in the Method │          │  Each Step's Parameters       │
│  Select Fixed-bed Mode and Enter │        └──────────────────────────┘          └──────────────────────────┘
612 │  a Solution Name in the Tag      │                 │                                       │
│  Field for Each Solution to be   │                 ▼ 622                                    ▼
│  Used in the Method              │        ┌──────────────────────────┐          ┌──────────────────────────┐
└──────────────────────────┘        │  Select the Method Tab and Enter │          │  Save the Method and Run It   │ ─ 632
                 │                   │  Each Method Step Into the Step │          └──────────────────────────┘
                 ▼                   │  Name Column of ME. Insert Rows │                   │
┌──────────────────────────┐        │         as Needed        │                   ▼
│  Choose a Color to Represent     │        └──────────────────────────┘          ┌──────────────────────────┐
614 │  Each Solution              │                 │ 624                          │  Adjust the Step Parameters   │ ─ 634
└──────────────────────────┘                 ▼                              │  Until the Method is          │
                 │                   ┌──────────────────────────┐          │       Optimized           │
                 ▼                   │  Assign the Appropriate  │          └──────────────────────────┘
┌──────────────────────────┐        │  Inlet for Each Step     │                   │
│  Indicate Which Column           │        └──────────────────────────┘                   ▼
616 │  Channel the Method         │                 │ 626                          ┌──────────────────────────┐
│  Should Use                 │                 ▼                              │  Convert to an SMB Method     │ ─ 636
└──────────────────────────┘        ┌──────────────────────────┐          └──────────────────────────┘
                 │                   │  Decide Which TWO of Time, Flow, │                   │
                 ▼                   │  or Volume are Easiest to Use for │                   ▼
┌──────────────────────────┐        │  Programming Each Step and │          ┌─────────────────┐
│  Indicate Which Outlet the Method │        │  Uncheck the Checkbox    │          │       End        │
618 │  Should Use and Which Sensors │        │  for the One Not Used    │          └─────────────────┘
│  are Connected to the Outlet  │        └──────────────────────────┘
└──────────────────────────┘                 │ 628
                                              ▼
           600                       ┌──────────────────────────┐
                                     │  Choose the Desired Units for the │
                                     │  Two Parameters Selected Above. │
                                     │  For Time Select Sec or Min.    │
                                     │  For Volume Select ml. L, or CV. │
                                     │  For Flow Select ml/min or cm/hr. │
                                     └──────────────────────────┘
```

## FIG. 6

EP 2 488 267 B1

Start Method Editor
on Computer —710

Load Optimized Fixed-bed Method
into Method Editor and Select SMB
Mode in Either the Method or
Application Configuration Tabs
712—

In the Application Configuration
Tab of the Method Editor, Enter
an Outlet Tag for Each Desired
Outlet for the Method
714—

Choose a Color to Represent
Each Outlet
716—

Verify the Column Assignments
Automatically Proposed by the
ME and Adjusted as Desired
718—

—720
Select the Method Tab and
Select the Determining Step or
Steps. This is Almost Always
the Load Step

—722
Enter a Desired Outlet for Each
Step in the Method. Add
Additional Outlets for Steps
as Desired

—724
Choose the Desired Units for the
Outlet Times for Each Step. Units
Include Sec, Min, or Determining
Step Units

—726
Adjust Outlet Times as Necessary
Making Sure That Total Outlet
Equals Inlet Time

Enter Appropriate Values for
Each Step's Parameters
as Desired —728

Save the Method and
Run It —730

Adjust the Step Parameters
Until the Method is Optimized —732

End

*FIG. 7*

*FIG. 8*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03026772 A2
- US 20070068873 A1